# EUROPÄISCHE PATENTANMELDUNG

(11) **EP 0 592 982 A1**
(43) Veröffentlichungstag der Anmeldung: **20.04.1994**
(21) Anmeldenummer: 93116417.2
(22) Anmeldetag: 11.10.1993
(51) Int. Cl.: F16D 69/04

(54) **Temperatursensibler Bremsbelag für Scheibenbremsen, bestehend aus Belaghalter und separaten Bremsbelagteilen**

(30) Priorität: 13.10.1992 DE 4234444
(71) Anmelder: KNORR-BREMSE AG, 80809 München (DE)
(72) Erfinder: Sonder, Egbert, D-32425 Minden (DE)

(57) **Zusammenfassung**

Die Erfindung betrifft eine temperatursensible Bremsbelagkonstruktion zur Verbesserung des Bremsvorganges bei insbesondere widrigen Umfeldbedingungen und bei Wagen mit einem großen Leer-/Beladeverhältnis. Die Bremsbelagkonstruktion ist beispielhaft derart gestaltet, daß der Bremsbelag aus vier Teilen und zwei Bimentallelementen besteht.

In Abhängigkeit der äußeren Bedingungen werden einzelne Belagteile vorrangig aktiviert.

Ein schnellerer Verschleiß einzelner Belagteile wird bei wechselnden Temperaturverhältnissen ausgeglichen. Durch diese Konstruktion werden höhere Belagdrücke insbesondere im Leerzustand erreicht und damit insbesondere Aquaplaningbildung vermieden.

## Beschreibung

Die Erfindung betrifft eine temperatursensible Bremsbelagkonstruktion zur Verbesserung des Bremsvorganges bei insbesondere widrigen Umfeldbedingungen.

Eine derartige Scheibenbremse, deren Belag aus mehreren Teilen besteht, ist aus dem deutschen Gebrauchmuster DE-G 74 30 335 bekannt. Hierbei befinden sich auf dem Bremsbelagträger ein zweiteiliger Bremsbelag

Der Bremsbelag oder seine Teile werden in Bremsbelagkonstruktionen bekannter Bauart in Eisenbahnfahrzeugen in den Belaghalter - mittels Schwalbenschwanzführung - eingeschoben. Die Bremsbeläge besitzen eine Reibeflächengröße, deren wirksame Fläche im Einsatz nicht verändert werden kann.

Die bekannten Belagreibstoffe haben die Eigenschaft, ihren für die geforderte Bremsleistung benötigten Reibwert nur ab eines bestimmten Mindesstbelagdruckes zu liefern, Ein akzeptabler Wert liegt bei mindestens 10 N/cm². Unterhalb dieses Wertes wird die Aquaplaningbildung gefördert.

Bei den im Hochgeschwindigkeitsgüterverkehr aus bestimmten Gründen - wie z. B` Schallemission - eingesetzten Scheibenbremsen muß das Bremsmoment durch automatische Lastabbremsung an das große Leer-/Beladen-Verhältnis von über 3,5 angepaßt werden, was zu äußerst kleinen Belagdrücken von unter 10 N/cm ² beim leeren Wagen führt, da der höchstzulässige Druck je Belag und Bremsscheibe beim beladenen Wagen technisch begrenzt ist.

Aufgabe der Erfindung ist es, eine technisch verträgliche, machbare und zuverlässige Lösung zu schaffen, die einen sicheren Betrieb ermöglicht und die genannten Nachteile ausräumt.

Es ist bekannt, daß eine Lösung dadurch erreicht werden kann, daß zum einen möglicherweise die Reibeigenschaften der Bremsbeläge an widrige Witterungsumstände unter Inkaufnahme anderer Nachteile wie z, B. Verschleiß angepaßt werden können, zum anderen lastabhänige Zuschaltung verschiedener Scheibenbremsen eines Radsatzes möglich ist, die jedoch technische Zusatzeinrichtungen an den Fahrzeugen erfordert, welche vor dem Betriebseinsatz geprüft werden müssen,

Es ist auch bekannt, daß der Belagdruck von 10 N/cm² kein eindeutig definierter Wert für das Erreichen kritischer Reibwertzustände ist, sondern daß dieser Zustand wesentlich von den Witterungsbedingungen und den Umgebungsverhältnissen um die jeweilige Scheibenbremse abhängt.

Das Ziel der Erfindung besteht darin, einen temperatursensiblen Selbssteuermechanismus für die tatsächlich wirksame Belagreibfläche anzuwenden, für den keine äußeren Steuerbefehele erforderlich und einzusetzen sind. Dabei sollen die Vorteile einfachen Belagwechels in einer Werkstatt nicht verändert werden.

Der bisher bekannte, standardisierte, zweigeteilte Bremsbelag wird mittels Schwalbenschwanz im Belaghalter fixiert, dies wird im Grundsatz beibehalten.

Der Bremsbelag erfährt jedoch neine dem Zweck angepaßte neue Aufteilung, die eine auf den Gesamtbelag bezogene optimale Trageigenschaft hat und trotzdem eine kleine, bei widrigen Umfeldbedingungen für die Reibeigenschaften erforderlche, verkleinerte, tatsächliche wirkende Reibfläche ermöglicht.

Als "widrige Umfeldbedingungen" werden winterliche Bedingungen wie große Nässe, Eis und besonders Naßschnee angenommen, die bei Termperaturen unter +5 °C auftreten können.

Efindungsgemäß wird die Afgabe dadurch gelöst, daß der Bremsvorgang bei widrigen Umfeldbedingungen zunächst mit einer kleinen Belagfläche beginnt und bei Enstehen von reibungsbedingter Temperatur durch Thermoweggeber mit kleinster Weggabe die übrige verfügbare Reibfläche an der Bremsung beteiligt.

Als einfache überschaubare Lösung wird eine solche Wirkung mittels Bimetallelementen erzeugt. Dabei werden temperaturabhängig zwei Endstücke des neu geteileten Belages eher kraft- als wegabhängig zur "Kaltreibung" bei Bremsbeginn herangezogen. Der Minimalweg ist begrenzt durch den minimal möglichen Weg der Belagteile in der Schwalbenschwanzführung.

Die Erfindung ist nachstehend an einem Ausführungsbeispiel näher erläutert, Die zugehörigen Zeichnungen zeigen in
- Fig.1:: Bremsbelaghalter mit angedeutetem 350 cm² Bremsbelag nach UIC-Standart, in Güterwagen für den Hochgeschwindigkeits-Verkehr vorgesehen.

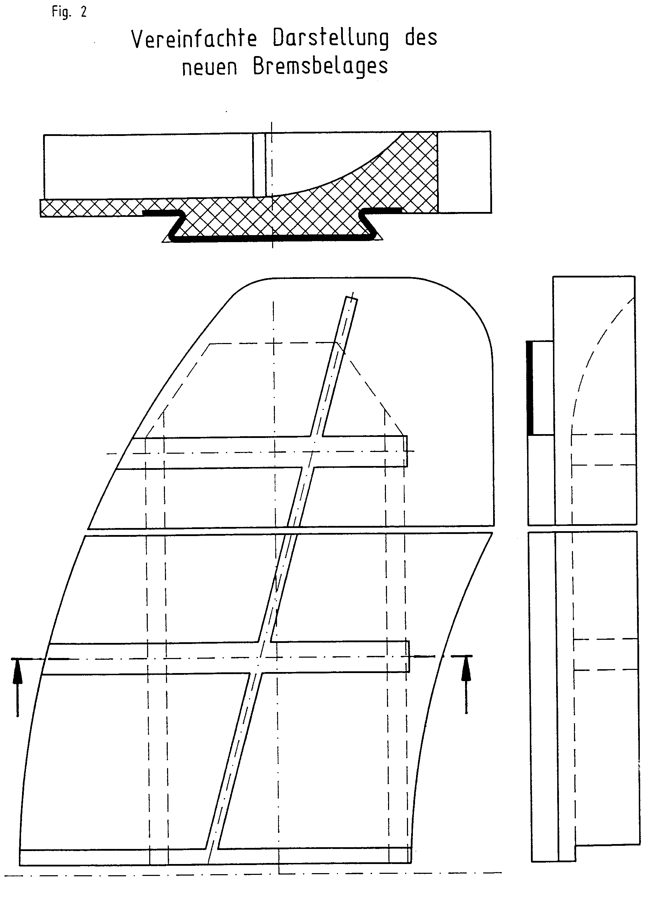

- Fig.2:: Bremsbelag gemäß Erfindung, beispielhaft geteilt am Beginn des inneren Radius, so daß der Belaghalter vier Belagteile aufnimmt.

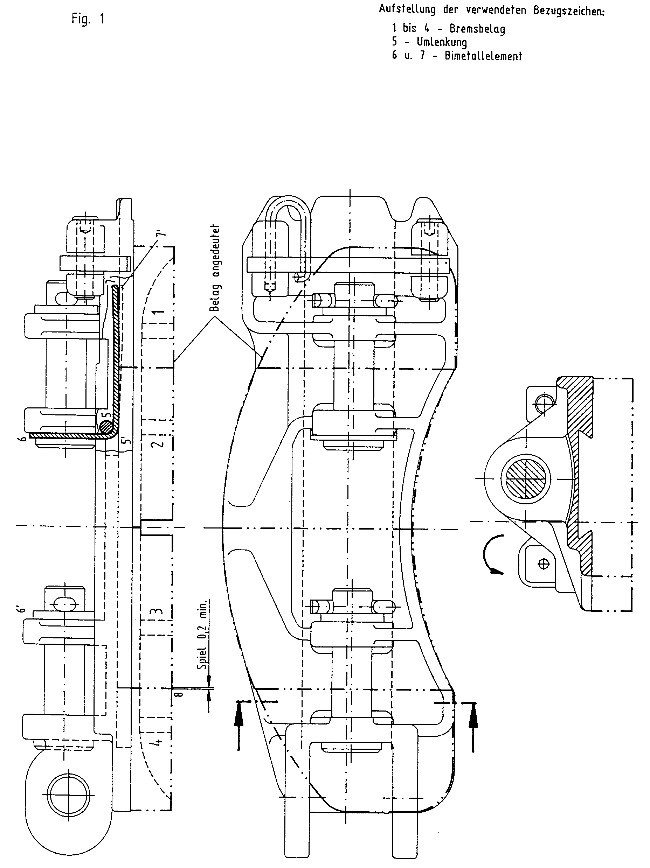

In Fig.1 ist vereinfacht ein Ausführungsbeispiel der Erfindung dargestellt

Der Bremsbelag ist in Teilflächen 1 - 4 aufgeteilt, wobei besonders die Trennung der Teile 2 und 3 nicht systembedingt ist. Die Teile 1 und 4 werden unter "widrigen Umständen" temperaturgesteuert vorrangig aktiviert. Die Trennfuge zwischen den Teilen 1 und 2 bzw. 3 und 4 ist so gewählt, daß sich ein Flächenanteil von ca. 75 zu 100 cm² ergibt und damit ein Flächenverhältnis von etwa 1 zu 1,33. Durch diese Flächenaufteilung ergibt sich z. B. eine Belagdruckerhöung von 5 auf 11,7 N/cm² bei Aktivierung nur der Flächen 1 und 4.

Ein Bimetallelement hoher Steifigkeit wird beispielhaft im Belaghalter in die Position 6-5-7 und in gleicher Weise 6'ff durch eine Schlitz im Belaghalterboden eingebracht in der Breite der Ausfräsung für den Schwalbenschwanz. Bei Pos. 6 wird es lokal unverlierbar fixiert und in Pos. 5 verschleißfest umgelenkt. Die thermosensible Schaltfunktion erfolgt bei Pos. 7, wobei vorgegeben wird, daß die Pos. 7' unterhalb 10 °C erreicht wird.

Ein Bimetallelement wie beschrieben wurde gewählt, weil sich im Bereich 5 - 7 zunächst und mit geringstmöglichem Zeitverzug Reibungswärme der Teilfläche 1 und 4 bemerkbar macht.

In der Pos, 7' muß eine Kraft gegen die Wegbegrenzung in der Schwalbenschwanzführung durch dieses Element erzeugt werden, die federnd überwindbar sein muß und die einem Druck von 11,7 N/cm² auf einer der Flächen 1 oder 4 entspricht.

Bei Raumtemperatur muß die "Kaltstellung" soweit verlassen sein, daß ein ungehemmtes Belagwechseln möglich ist. In jedem Fall muß aber auch in der "Kaltstellung" dieser mit Kraftaufwand erfolgen können.

Als Variante ist auch denkbar, eine gegenseitige Abstützung 6 - 6' vorzunehmen, die zwecks Belagwechselerleichterung entspannbar gestaltet werden könnte.

Die Krafteinteilung in den Teilflächen 1 und 4 in der "Kaltstellung" durch das Bimetallelement gem. Fig.1 liegt nicht im Flächenschwerpunkt und ist zu optimieren für eine Serienausführung auch unter ggf. Formänderung der Teilflächen.

### Wirkzusammenhänge der Teilflächen:

Bremsungen bei niedrigen Außentemperaturen beginnen immer mit den Teilflächen 1 und 4. Dadurch verschleißen diese Belagteile aber auch schneller als die mittleren Teile und zwar solange, bis alle Teile gleichen Belagdruck erfahren. Dies ist der Fall, wenn der Hubweg der Endteile erschöpft ist.

Sind die Belagdrücke auf den Teilflächen 1 und 4 bei Bremsbeginn jedoch größer als etwa 12 N/cm², so weichen die Endstücke im Rahmen ihres Hubweges der Kraft aus und die mittleren Teile leisten verstärkt Bremsarbeit mit der Folge auch größeren Verschleißes. Dies geht solange, bis der Rückhub der Endstücke zu null gegangen ist und umso schneller je größer die geforderte Bremsarbeit ist (Gefälle, beladener Wagen, Vₘₐₓ -Bremsungen).

Das Funktionsprinzip nach Vorschlag regeneriert sich damit selbstätig. Es ist auch nicht kritisch, wenn die vorgeschobenen Endstücke in dieser Position "festfrieren", denn das "Kaltbremsen" mit kleiner Belagfläche ist gegeben und die folgende Erwärmung bewirkt auftauen.

Der thermosensible Effekt würde sicher effektiver erfolgen, wenn die an der Reibfläche entstehende Wärme möglichst direkt an den Thermoweggeber gebracht werden könnte, z. B. durch in die Endstücke eingearbeiteten Cu- oder Alu-Übertragungspfropfen.

Der Vorteil der Erfindung besteht darin, daß bei allen vorkommenden Temperatur- bzw. Umfeldverhältnissen ein bestimmter Mindestbelagdruck schnell erreicht wird und damit eine "Aquaplanbildung" vermieden wird. Die bisherigen Vorteile einfachen Belagwechsels in einer Werkstatt werden dabei nicht verändert. Die Herstellung der Teilflächen aus einem Bremsbelag ist technisch unkompliziert und damit kostengünstig. Aufwendige prüfpflichtige Maßnahmen an der Bremsteuerung sind nicht erforderlich.

## Patentansprüche

1. Bremsbelag für Scheibenbremsen, bestehend aus Belaghalter und mehreren Bremsbelagteilen, dadurch gekennzeichnet, daß mindestens 1 Bremsbelagteil mit einem temperaturabhängigen Element versehen ist, welches bei Unterschreiten einer bestimmten Temperatur diesen Belagteil vorrangig aktiviert und verstärkt gegen die Bremsscheibe andrückt`

2. Bremsbelag nach Anspruch 1, dadurch gekennzeicnet, daß die Belagteile (1 bis 4) von unterschieldicher Größe sind.

3. Bremsbelag nach Anspruch 1 und 2, dadurch gekennzeichnet, daß die Funktion der temperaturabhängigen Elemente durch Bimetallelemente und/oder andere Elemente erfüllt wird.

4. Bremsbelag nach Anspruch 1 bis 3, dadurch gekennzeichnet, daß in Teile des Bremsbelages Temperaturbefehlelemente eingearbeitet werden, die die Wärme unter der Belagfläche besser an das temperatursensible Bauteil des Belaghalters heranführen.
